# DEMANDE DE BREVET EUROPEEN

(11) **EP 1 217 587 A1**
(43) Date de publication de la demande: **26.06.2002**
(21) Numéro de dépôt: 01420233.7
(22) Date de dépôt: 05.12.2001
(51) Int. Cl.: G07B 15/02, G07B 13/00

(54) **Taximètre électronique**

(30) Priorité: 22.12.2000 FR 0016939
(71) Demandeur: Automatisme et Techniques Avancees, 13710 La Barque (FR)
(72) Inventeur: Ricard, Claude, 60022 Glencoe - Illinois (US)
(74) Mandataire: Palix, Stéphane

(57) **Abrégé**

Taximètre électronique (1), caractérisé en ce qu'il comporte :
◆ des moyens de détection (7), aptes à détecter un signal émis par une borne (11) de péage, lorsque le véhicule (5) équipé du taximètre (1) passe à proximité de ladite borne (11) ;
◆ des moyens de localisation (12), aptes à déterminer la localisation du véhicule, lesdits moyens étant activés au moins lorsque les moyens de détection (7) détectent la proximité d'une borne de péage ;
◆ des moyens de détermination, aptes à déterminer l'identification de la borne de péage ainsi détectée, en fonction de la localisation du véhicule ;
◆ des moyens aptes à calculer le montant du péage ainsi déterminé ;
◆ des moyens (2) pour afficher le montant ainsi calculé.

## Description

### Domaine technique

L'invention se rattache au domaine des taximètres. Elle vise plus particulièrement un taximètre perfectionné qui est conçu pour tenir compte du prix des péages traversés par le taxi, en vue d'incorporer ce prix dans le montant de la course payée par le client.

### Techniques antérieures

Compte tenu des développements des réseaux autoroutiers, il est de plus en plus fréquent qu'une course de taxi emprunte des sections payantes, nécessitant l'acquittement d'un péage. Ces zones payantes peuvent être soit un tronçon autoroutier, soit le passage d'un ouvrage d'art particulier, tel qu'un tunnel ou un pont.

L'acquittement du montant du péage peut se faire soit à l'entrée du tronçon considéré, soit à la fin de ce dernier, lorsque plusieurs sorties peuvent être utilisées.

L'acquittement du montant du péage peut se faire de différentes manières. Ainsi, il peut être demandé aux véhicules de s'arrêter pour payer le prix correspondant à une borne, par différents types de moyens de paiement que sont le paiement en espèce, ou par un titre de paiement particulier tel qu'une carte bancaire ou une carte d'abonnement.

Le paiement peut également s'effectuer sans nécessiter l'arrêt du véhicule à une borne de péage. Dans ce cas, le véhicule est équipé d'un circuit électronique particulier, généralement appelé "transpondeur". Lorsque le véhicule passe à proximité de la borne de péage, le transpondeur reçoit un signal particulier dans une fréquence déterminée. En réponse, le transpondeur émet un signal permettant à la borne de péage d'identifier le véhicule approchant. Avec cette identification, l'exploitant du péage peut enclencher une procédure de paiement selon les modalités qu'il a définies avec l'utilisateur.

Dans le document US 5 864 831, on a décrit un dispositif sophistiqué permettant d'assurer le paiement de péage dont le prix varie en fonction de multiples paramètres. En effet, ainsi sur certains secteurs autoroutiers, ou sur certains ouvrages d'art, le prix du péage peut être fonction de la masse du véhicule, du niveau de pollution, ou bien encore de la vitesse maximale. Le dispositif décrit dans ce document permet de calculer le montant correspondant à chacun des cas de figures.

La détermination du péage à prendre en compte est assurée grâce à un système de localisation de la position du véhicule, par exemple par un système fonctionnant par satellite, et connus sous l'appellation "GPS" signifiant "Global Positioning System".

L'intégralité du réseau autoroutier est enregistré dans ce dispositif. En fonction de la localisation déterminée, et des différents autres paramètres, le dispositif calcule le prix exact du péage. Ce dispositif présente un inconvénient majeur puisqu'il nécessite l'enregistrement de l'intégralité du réseau autoroutier et qu'il compare en permanence la position du véhicule avec l'enregistrement cartographique du réseau. Ces opérations sont relativement nombreuses, et requièrent une très importante précision en ce qui concerne les moyens de localisation. En effet, dans le cas où deux routes sont situées côte à côte, et que l'une seule d'entre elles est à péage, il est nécessaire que la précision de positionnement permette de distinguer si la route parcourue est à péage ou non.

Le problème que se propose de résoudre l'invention est celui de la prise en compte du montant du péage dans le prix total de la course de taxi.

Un des objectifs de l'invention est de permettre cette prise en compte en éliminant tout risque de fraude, pour assurer que le client se voit effectivement facturé le montant exact du péage. En effet, jusqu'à présent, les montants du péage sont généralement ajoutés au montant de la course, lorsque celle-ci est terminée. C'est donc le chauffeur qui fixe le montant du péage qu'il convient d'ajouter à celui de la course, avec le risque de fraude correspondant.

L'invention propose donc un taximètre qui permette de remplir ces objectifs de façon simple et sûre.

### Exposé de l'invention

L'invention concerne un taximètre électronique qui se caractérise en ce qu'il comporte
◆ des moyens de détection, aptes à détecter un signal émis par une borne de péage, lorsque le véhicule équipé du taximètre passe à proximité de ladite borne ;
◆ des moyens de localisation, aptes à déterminer la localisation du véhicule, lesdits moyens étant activés au moins lorsque les moyens de détection détectent la proximité d'une borne de péage ;
◆ des moyens de détermination, aptes à déterminer l'identification de la bande de péage ainsi détectée, en fonction de la localisation du véhicule ;
◆ des moyens aptes à calculer le montant du péage ainsi déterminé ;
◆ des moyens pour afficher le montant ainsi calculé.

Autrement dit, le taximètre réagit à la réception d'un signal émis par la borne de péage, signifiant que le véhicule est en passe de traverser la barrière de péage. Lorsque le taximètre reçoit cette information, il déclenche un processus de détermination du prix du péage. Cette détermination passe préalablement par la localisation du véhicule qui peut se faire par des moyens très variés. Lorsque la localisation du véhicule est déterminée, le taximètre en déduit quelle est la borne de péage à proximité de laquelle il se trouve. Le prix du péage est ainsi calculé, et il peut ainsi être communiqué au client du taxi.

Dans une forme particulière de réalisation, les moyens de détection peuvent comprendre :
◆ un circuit accordé à une fréquence correspondant à celle des signaux émis par les bornes de péage ;
◆ un redresseur associé audit circuit accordé ;
◆ un détecteur de niveau connecté audit redresseur.

Ainsi, lorsque le niveau détecté est supérieur à un seuil prédéterminé, le processus de détermination du prix du péage est enclenché par le taximètre.

Dans une forme particulière de réalisation, les moyens de détection peuvent être constitués par une partie du transpondeur utilisé pour le paiement du péage par le chauffeur du taxi.

Divers types de moyens de localisation de véhicules peuvent être utilisés.

Ainsi, les moyens de localisation peuvent être aptes à recevoir des signaux émis par les tours de connexion d'un réseau de téléphonie cellulaire. Dans ce cas, les moyens de localisation sont aptes à déterminer le numéro d'identification de la tour de connexion la plus proche du véhicule ou d'une tour proche du véhicule. Ainsi, en fonction du numéro d'une tour de connexion proche, le taximètre peut déterminer la borne de péage à proximité de laquelle se trouve le taxi.

En pratique, lorsque la localisation se fait grâce aux tours de connexion d'un réseau téléphonique cellulaire, les moyens de localisation peuvent être constitués d'un téléphone cellulaire proprement dit, convenablement connecté au taximètre. Il peut s'agir également d'un modem radio tel que les modems numériques fonctionnant selon la norme "GPDP" dans la technologie GSM data utilisée en Europe, ou la norme "CDPD" utilisée aux Etats-Unis.

La localisation peut également utiliser un dispositif de positionnement par satellite, généralement appelé "GPS" pour "Global Positioning System".

Il peut s'agir également d'un autre type de système de localisation, fonctionnant par exemple par triangulation au moyen d'ondes radio. Ce principe de localisation peut être éventuellement accessible sur les téléphones cellulaires.

Lors du processus de détermination du prix du péage, les moyens de localisation peuvent être activés selon différents modes de fonctionnement.

Ainsi, les moyens de localisation peuvent être activés uniquement au moment de la détection de la proximité d'une borne de péage. Autrement dit, c'est lorsque le circuit de détection détecte la proximité du péage que les moyens de localisation sont mis en fonctionnement.

Dans une variante de réalisation, les moyens de localisation sont activés à partir de la détection de la proximité d'une borne de péage, de manière à déterminer l'évolution de la localisation, et notamment le sens de déplacement du véhicule, ultérieurement à la détection de la borne de péage. De la sorte, le taximètre peut déterminer le parcours du taxi après la borne de péage.

Il est ainsi possible de déterminer le sens de parcours du taxi, et donc de distinguer deux barrières de péage contiguës mais situées sur des voies de circulation différentes.

Dans une autre variante de réalisation, les moyens de localisation sont activés en permanence, ce qui permet de déterminer l'évolution de la localisation et notamment le sens de déplacement du véhicule, dès la détection de la proximité de la borne de péage. Ceci permet donc de déclencher plus rapidement le processus de calcul du prix du péage, puisque le sens de parcours est très rapidement déterminé. Cependant, il peut toutefois s'avérer nécessaire de continuer la détermination de la localisation du véhicule pour discriminer des changements de direction postérieurs au passage de la barrière de péage.

Avantageusement en pratique, les moyens de détermination et d'identification de la borne de péage en fonction de la localisation du véhicule comprennent une base de données. Cette base de données peut être soit programmée dans le microprocesseur incluant le taximètre, ou bien encore téléchargeable dans ce dernier. La programmation peut avoir lieu de façon ponctuelle, par intervention du fabriquant du taximètre, soit par l'installateur, ou bien encore un contrôleur ou un réparateur habilité.

Dans une forme particulière, la base de données peut être téléchargée à la demande par le chauffeur, par connexion avec un site informatique distant incluant par exemple un serveur connecté à Internet. La connexion s'effectue alors grâce au modem radio ou au téléphone cellulaire qui est déjà utilisé pour la fonction de localisation du véhicule. Le téléchargement peut également être automatique, de façon périodique, pour assurer une mise à jour régulière de la base de données.

Le téléchargement de la base de données peut également se faire en temps réel. Dans ce cas, la base de données est interrogée lors de la détection de la proximité d'une borne de péage. Cette dernière variante présente l'avantage de permettre la réactualisation du prix du péage dès que les modifications apparaissent. Cette connexion ou ce téléchargement fréquent permet également de s'adapter à une évolution de l'implantation des tours de connexion des réseaux de téléphonie cellulaire, lorsque le taximètre utilise de tels moyens de localisation.

En pratique, l'affichage du montant peut se faire soit sur l'écran du taximètre, soit sur le reçu imprimé à la fin de la course, ou bien encore selon ces deux formules.

Avantageusement en pratique, le montant du péage peut être ajouté au montant de la course déterminé au moment de la détection, du sorte que le prix de la course affiché sur le cadran du taximètre tient compte du montant du péage. Avantageusement, l'ajout de ce péage peut être signalé sur le taximètre par une message d'annonce tel que "Peage" ou " Toll " pour les pays de langue anglaise. L'affichage du prix du péage peut remplacer transitoirement le prix de la course de façon intermittente. Il est également possible d'afficher alternativement le prix à payer et le total des suppléments ou " Extras " dont notamment le montant du péage.

Avantageusement le prix du péage peut être transcrit dans un journal chronologique des péages en même temps que l'état du taxi 'Libre' ou 'Occupé' et du numéro de chauffeur et d'autres informations. Ce journal permet au loueur de véhicule taxi d'assurer la gestion de l'utilisation des "transpondeurs" de télépéage. Ceci permet de combattre l'usage abusif fait à titre personnel des transpondeurs fait par certains chauffeurs qui louent le véhicule taxi. Ce journal peut être enregistré dans le taximètre ou dans une base de données déportée.

Le prix du péage est aussi avantageusement ajouté dans deux totalisateurs par chauffeur correspondant aux péages franchis soit en position 'Libre' soit en position 'Occupé', ce qui permet de discriminer les cas où les péages ont été payés dans le cadre d'une course ou non

### Description sommaire des figures

La manière de réaliser l'invention, ainsi que les avantages qui en découlent ressortiront bien de la description du mode de réalisation qui suit, donné à titre d'exemple non limitatif, à l'appui des figures annexées, dans lesquelles :
La figure 1 est une vue d'ensemble schématique d'une barrière de péage et d'un véhicule équipé d'un taximètre conforme à l'invention.
La figure 2 est un schéma d'un taximètre conforme à l'invention équipé des moyens caractéristiques.

### Manière de réaliser l'invention

Comme déjà évoqué, l'invention concerne un taximètre perfectionné qui permet de prendre en compte les montants des péages acquittés pendant la course, de manière à les afficher à destination du client, et/ou de les incorporer sur son reçu lui servant de facture.

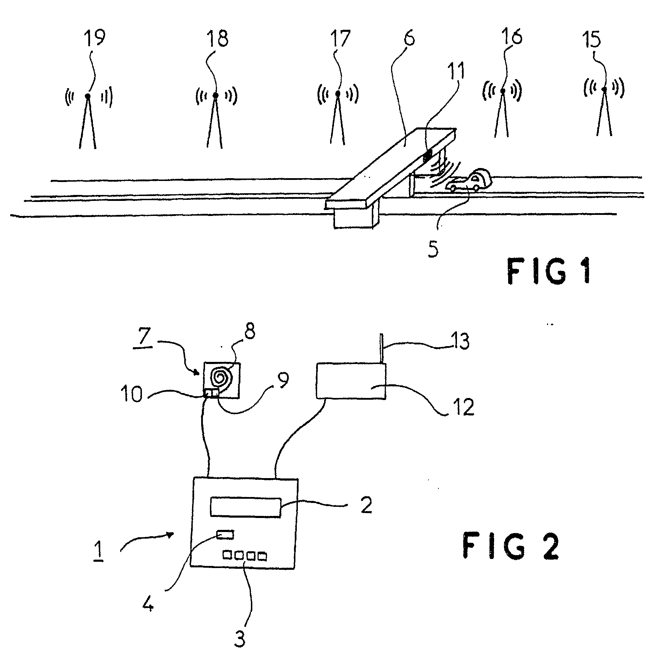

De façon générale, un tel taximètre (1) comme illustré à la figure 2 comprend un boîtier classique, intégrant de façon connue un cadran d'affichage (2) et un clavier (3) permettant l'activation de différentes fonctions. Un tel taximètre (1) comprend une carte électronique incluant un microprocesseur (4) apte à gérer les différentes fonctions de traitement pour le bon fonctionnement du taximètre.

Conformément à l'invention, le boîtier du taximètre (1) est connecté à des moyens de détection (7), qui sont destinés à permettre la détection de la proximité d'une borne de péage. Différents moyens de détection peuvent être utilisés, en correspondance avec les systèmes émetteurs des bornes de péage. Ainsi, de tels moyens de détection peuvent être constitués par un circuit électronique monté derrière le pare-brise du véhicule. Un tel circuit (7) peut par exemple être constitué d'un circuit accordé (8) associé à un redresseur (9) et à un détecteur de niveau (10). Dans une variante, le circuit accordé peut également être interfacé par un convertisseur analogique/numérique directement implanté sur une carte électronique du taximètre.

Avantageusement le moyen de détection sera constitué d'un antenne gravée sur une plaque de circuit imprimé disposée dans le taximètre ou sur le socle de fixation du taximètre de façon à être dans le champ direct de l'émetteur de la borne de péage, au travers du pare-brise.

Le circuit accordé (8) est centré sur la fréquence de cet émetteur généralement dans la gamme UHF, et par exemple au voisinage du GigaHertz.

En effet, les bornes utilisées dans le cadre du paiement automatique des péages émettent des signaux relativement puissants, dans la bande UHF.

Ainsi, les moyens de détection (7) transmettent au microprocesseur (4) du taximètre (1) l'information selon laquelle un signal d'énergie suffisante a été reçu en provenance d'une borne de péage.

Bien entendu, l'invention n'est pas limitée à cette seule forme de circuit de détection, mais couvre également toutes les variantes qui permettent de détecter les signaux généralement émis par les bornes de péage utilisées dans le but d'un paiement automatique.

Conformément à l'invention, le boîtier (1) du taximètre est également relié à des moyens de localisation. Dans l'exemple illustré à titre non limitatif, ces moyens de localisation peuvent être constitués d'un radio-modem (12). Par radio-modem, on entend un dispositif qui peut être interfacé avec un appareil électronique, et qui est apte à émettre et recevoir des signaux à destination et en provenance d'un réseau de téléphonique cellulaire. Un tel radio-modem (12) peut par exemple fonctionner dans certaines bandes de fréquence ou canaux permettant le transport de données, par opposition à la bande destinée au transport de la voix. Un tel radio-modem peut donc fonctionner selon la norme GPRS sur un réseau de téléphonie cellulaire de type GSM, ou bien encore selon la norme CPDP sur l'un des divers réseau de téléphonie cellulaire en vigueur aux Etats-Unis.

Le radio-modem (12) est donc équipé d'une antenne (13) qui peut éventuellement être intégrée. Ce radio-modem (12) peut être incorporé à l'intérieur du taximètre, ou bien encore déporté dans une zone particulière du véhicule.

En cours de fonctionnement, le radio-modem (12) reçoit les signaux émis par les différentes tours (15-19) à portée de réception de la trajectoire du véhicule, comme illustré à la figure 1.

Parmi les différentes tours (15-19) qui émettent à destination du radio-modem (12) , une seule dialogue avec ce dernier. Il s'agit de la tour qui sert de point d'entrée sur le réseau de téléphonique cellulaire, et qui est généralement la plus proche de l'antenne (13) du modem. Chaque tour (15-19) est identifiée par un numéro différent. Ce numéro fait partie des données émises par la tour qui sont reçues par le radio-modem (12). De façon connue, le radio-modem sélectionne la tour (15-19) disponible qui correspond aux signal de plus forte puissance reçu, correspondant généralement à la distance la plus courte. Comme le système de téléphonie cellulaire est fondé sur une multiplicité de tours à faible portée, ce sera dans tous les cas une tour proche du véhicule.

Les emetteurs qui sont disposés sur les tours (15-19) émettent sur diverses fréquences ou "canaux". Chacun de ces émetteurs indique le numéro d'identification de la tour sur laquelle il est installé. Le modem radio (12) balaye les différents canaux pour trouver l'émetteur le mieux reçu qui est généralement sur la tour la plus proche. Le modem radio (12) se cale alors sur le canal correspondant pour dialoguer avec cet émetteur ou par raccourci de langage avec la tour qu'il a choisi.

En cours de fonctionnement, le modem (12) peut donc identifier la tour (15-19) à laquelle il est connecté, et informer le microprocesseur (4) du taximètre (1) du numéro d'identification de cette tour. Il est a noter que par moment, le long d'un trajet, la liaison n'est assurée avec aucune tour. Cette absence de tour est prise en compte par le microprocesseur.

Selon un mode particulier du fonctionnement du taximètre (1) le microprocesseur enregistre au fur et à mesure les numéros d'identification des différentes tours qui sont détectées par le modem (12).

Avantageusement, l'acquisition des numéros de tour est effectué à intervalles de distance parcourue réguliers, par exemple tous les 50 mètres. Les numéros d'identification correspondants sont mémorisés pendant une durée correspondant à une distance parcourue prédéterminée, par exemple correspondant au dernier kilomètre. La détermination de la distance parcourue est effectuée par le taximètre qui est par essence équipé de moyens adéquats.

Lorsque le véhicule (5) tel qu'illustré à la figure 1 arrive à proximité d'une barrière de péage (6), il entre dans le champ de la borne émettrice (11). Le circuit de détection (7) détecte donc la présence de la borne (11) et en informe le microprocesseur (4). A ce moment, le microprocesseur (4) examine quel est le numéro d'identification de la tour (16) à laquelle le modem (12) est connecté.

Le microprocesseur est programmé pour avoir accès à une base de données mettant en correspondance le numéro d'identification de la tour (16) avec le montant du péage à acquitter lors du passage de la barrière de péage (6).

Dans certains cas particuliers, la simple information de la localisation du véhicule peut ne pas être suffisante pour déterminer le montant du péage. C'est ainsi le cas lorsque plusieurs voies de circulation donnent lieu à des paiements différents ou bien encore que le sens de traversée de la barrière de péage (6) induit des paiements différents.

Dans ce cas, le taximètre peut comparer le numéro d'identification de la tour (16) à laquelle le modem (12) est connecté au niveau de la borne de péage, avec le numéro d'identification de la tour (15) avec laquelle il était en connexion précédemment. Dans ce cas, cette comparaison permet de déterminer le sens de parcours et donc le sens de traversée de la barre de péage (6).

Une autre solution consiste à déterminer le numéro d'identification de la tour à laquelle le modem (12) sera connecté après le passage de la barrière de péage. Pour des configurations de réseaux routiers complexes, une combinaison de ces deux formules permettra de lever les ambiguïtés dans le cas de péage multiples. Dans ce cas, le microprocesseur garde en mémoire la liste des numéros d'identification des tours de connexion (15-19) auxquels le modem est connecté lors du parcours.

Néanmoins, dans les configurations plus simples, la seule identification de la tour la plus proche de la borne de péage (11) peut suffir pour déterminer le montant du péage.

Il est à noter que lorsque les taxis traversent certaines zones telles que certains tunnels ou ponts métalliques, une seule tour du réseau de téléphonie cellulaire est accessible. Dans ce cas, si le numéro d'identification de la tour reste constant, malgré le parcours d'une certaine distance calculée par le microprocesseur, ce dernier déduira automatiquement que le taxi a pénétré dans un pont ou un tunnel, et en déduira le sens de traversée du péage et donc son montant.

Comme déjà évoqué, la correspondance entre la localisation du véhicule (5) et le montant du péage à acquitter est enregistrée dans une base de données ou table de correspondance. Cette table de correspondance peut être programmée dans une mémoire accessible par le microprocesseur (4) du taximètre. Cette programmation peut avoir lieu par des personnes habilitées lors de la programmation générale du taximètre, ou bien alors lors de visites de contrôle. Cette base de données peut également être téléchargée de façon régulière et automatique, ou bien encore à la demande par le chauffeur.

Dans ce cas, l'évolution des montants des péages, ainsi que la liste des identifications des tours du réseau de téléphonie cellulaire est prise en compte automatiquement par le taximètre.

Dans une forme particulière, le taximètre peut interroger une base de données distante. Cette base de données contient la table de correspondance entre le numéro d'identification de la tour du réseau de téléphonie cellulaire et le montant du péage à acquitter. Cette interrogation peut se faire en utilisant le réseau de téléphonie cellulaire auquel est connecté le modem (12), en transmettant les requêtes via ce dernier.

Dans ce cas, le modem radio (12) sert à la fois de moyen de localisation, et intervient également dans les moyens permettant de calculer le montant du péage.

Dans le cas où il est nécessaire de discriminer plusieurs voies de péage, ou le sens de circulation, l'interrogation de la base de données est effectué en transmettant le jeu de numéros d'identification des tours avant le péage et éventuellement le jeu de numéros d'identification des tours après le péage. Dans le deuxième cas ceci permet de déterminer également le sens de la traversée du péage.

Dans une forme particulière avantageuse, la base de données caractéristique peut être hébergée sur un site Internet, par exemple avec un protocole d'authentification en limitant l'accès.

Lorsque le microprocesseur (4) détermine le montant du péage, par interrogation locale ou distante de la base de données, il en provoque l'affichage sur le cadran (2) du taximètre. Cet affichage peut avoir lieu pendant une durée déterminée éventuellement, avec un mécanisme d'avertissement sonore ou lumineux du client. Ce dernier peut ainsi prendre connaissance du montant du péage qui sera ajouté au montant total de la course.

Le taximètre peut également incrémenter le montant courant de la course du montant du péage ainsi calculé.

Lorsque la course est terminée, et que le chauffeur demande l'impression du reçu, ce dernier fait apparaître le montant de la course, le montant des péages, et la somme globale.

Bien entendu, l'invention n'est pas limitée à la seule forme de réalisation décrite en détail ci-avant, notamment en ce qui concerne les moyens de localisation par l'interrogation du réseau de téléphonie cellulaire avoisinant. En effet, d'autres types de moyens de localisation peuvent être employés et notamment les systèmes fonctionnant par réception des signaux issus de satellites, et généralement dénommés GPS pour "Global Positioning System".

Dans ce cas, le modem radio peut être remplacé par un dispositif GPS, qui envoie à destination du microprocesseur (4) du taximètre un certain nombre d'informations. Ces informations peuvent être un couple de coordonnées en longitude, éventuellement accompagnées d'une valeur d'incertitude.

Dans ce cas, le microprocesseur interroge la base de données qui à la place des numéros de tours cellulaires contient les valeurs correspondantes en latitude et en longitude des barrières de péage.

D'autres moyens de localisation peuvent être employés tels que notamment ceux qui utilisent des systèmes de triangulation par onde radio.

Il ressort de ce qui précède que le taximètre conforme à l'invention présente de multiples avantages et notamment :
◆ la possibilité d'intégrer automatiquement le montant des péages acquittés par le taxi sur le montant total de la course ;
◆ une mise à jour en temps réel des montants des péages et de leur localisation ;
◆ la diminution des risques de fraude, puisque les montants des péages sont ajoutés au montant de la course par le microprocesseur, sans l'intervention du chauffeur;
◆ l'élimination du risque de facturation erronée lors du passage au voisinage géographique d'un péage, par exemple dans la configuration d'un pont passant au dessus d'un péage ou d'une voie libre parallèle à une voie à péage.
◆ La possibilité d'établir un journal chronologique des péages, dans lequel sont enregistrés pour chaque passage de péage, le montants, l'état du taxi "Libre" ou "Occupé", la date et l'heure ce qui permet de gérer l'utilisation des 'transpondeurs' de télépéage.
◆ La distinction des montants des péages acquittés, par chauffeur selon que le taximètre est en position 'Libre' et en position 'Occupé'

## Revendications

1. Taximètre électronique (1), **caractérisé en ce qu'**il comporte
◆ des moyens de détection (7), aptes à détecter un signal émis par une borne (11) de péage, lorsque le véhicule (5) équipé du taximètre (1) passe à proximité de ladite borne (11) ;
◆ des moyens de localisation (12), aptes à déterminer la localisation du véhicule, lesdits moyens étant activés au moins lorsque les moyens de détection (7) détectent la proximité d'une borne de péage ;
◆ des moyens de détermination, aptes à déterminer l'identification de la borne de péage ainsi détectée, en fonction de la localisation du véhicule ;
◆ des moyens aptes à calculer le montant du péage ainsi déterminé ;
◆ des moyens (2) pour afficher le montant ainsi calculé.

2. Taximètre selon la revendication 1, **caractérisé en ce que** les moyens de détection (7) comprennent:
◆ un circuit accordé (8) à une fréquence correspondant à celle des signaux émis par les bornes (11) de péage ;
◆ un redresseur (9) associé audit circuit accordé (8) ;
◆ un détecteur de niveau (10) connecté audit redresseur (9).

3. Taximètre selon la revendication 2, **caractérisé en ce que** le circuit accordé est constitué d'un antenne gravée sur une plaque de circuit imprimé disposée dans le taximètre ou sur le socle de fixation du taximètre, lui même destiné à être installé à l'arrière du pare-brise du véhicule, de façon à être dans le champ de l'émetteur de la borne de péage au travers du pare-brise du véhicule.

4. Taximètre selon la revendication 1, **caractérisé en ce que** les moyens de localisation (12) sont aptes à recevoir les signaux émis par les tours de connexion (15-19) d'un réseau de téléphonie cellulaire.

5. Taximètre selon la revendication 4, **caractérisé en ce que** les moyens de localisation sont aptes à déterminer le numéro d'identification d'une tour (16) de connexion proche du véhicule (5).

6. Taximètre selon la revendication 4, **caractérisé en ce que** les moyens de localisation comportent un téléphone cellulaire.

7. Taximètre selon la revendication 4, **caractérisé en ce que** les moyens de localisation comportent un modem radio (12).

8. Taximètre selon la revendication 1, **caractérisé en ce que** les moyens de localisation incluent un dispositif de positionnement GPS.

9. Taximètre selon la revendication 1, **caractérisé en ce que** les moyens de localisation sont activés au moment de la détection de la proximité d'une borne de péage.

10. Taximètre selon la revendication 1, **caractérisé en ce que** les moyens de localisation sont activés à partir de la détection de la proximité d'une borne (11) de péage, de manière à déterminer l'évolution de la localisation, et notamment du sens de déplacement du véhicule (5), ultérieurement à la détection de la borne de péage.

11. Taximètre selon la revendication 1, **caractérisé en ce que** les moyens de localisation sont activés en permanence, de manière à déterminer l'évolution de la localisation et notamment le sens de déplacement du véhicule, dès la détection de la proximité de la borne (11) de péage.

12. Taximètre selon la revendication 5, **caractérisé en ce que** l'acquisition des numéros d'identification de tour est effectuée à intervalles réguliers de distance parcourue.

13. Taximètre selon la revendication 5, **caractérisé en ce que** les numéros d'identification des tours sont mémorisés pendant une durée correspondant à une distance parcourue prédéterminée

14. Taximètre selon la revendication 1, **caractérisé en ce que** les moyens de détermination d'identification de la borne de péage (11) en fonction de la localisation du véhicule comprennent une base de données.

15. Taximètre selon la revendication 14, **caractérisé en ce que** la base de données est programmée dans le microprocesseur (4) inclut dans le taximètre (1).

16. Taximètre selon la revendication 14, **caractérisé en ce que** la base de données est téléchargeable dans le taximètre.

17. Taximètre selon la revendication 14, **caractérisé en ce que** la base de données est hébergée dans un site informatique distant, et est interrogée lors de la détection de la proximité d'une borne (11) de péage.

18. Taximètre selon la revendication 14, **caractérisé en ce que** la base de données inclut le montant du péage.

19. Taximètre selon la revendication 1, **caractérisé en ce que** l'affichage du montant du péage se fait sur l'écran (2) du taximètre.

20. Taximètre selon la revendication 1, **caractérisé en ce que** l'affichage du montant du péage se fait par impression sur le reçu imprimé à la fin de la course.

21. Taximètre selon la revendication 1, **caractérisé en ce que** le montant du péage est ajouté au montant de la course, au moment de la détection.

22. Taximètre selon la revendication 1, **caractérisé en ce que** les montants des péages sont enregistrés dans un journal chronologique.

23. Taximètre selon la revendication 1, **caractérisé en ce que** les montants des péages franchis en position libre sont cumulés dans un registre particulier.

24. Taximètre selon la revendication 1, **caractérisé en ce que** les montants des péages franchis en position 'Occupée' sont cumulés dans un registre particulier.
